# EUROPÄISCHE PATENTSCHRIFT

(11) **EP 0 820 943 B1**
(45) Veröffentlichungstag und Bekanntmachung des Hinweises auf die Patenterteilung: **26.06.2002**
(21) Anmeldenummer: 97112622.2
(22) Anmeldetag: 23.07.1997
(51) Int. Cl.: B65G 47/71, B65G 47/68, B65G 15/10, B65G 15/50, B65G 47/64

(54) **Vorrichtung zum Verändern der Zahl der Förderströme von Lebensmittelstapeln**
Device for changing number of conveying streams of food piles
Dispositif permettant de modifier le nombre de pistes de transport de piles d'aliments

(30) Priorität: 24.07.1996 DE 29612787 U
(43) Veröffentlichungstag der Anmeldung: 28.01.1998
(73) Patentinhaber: Dixie-Union GmbH & Co. KG, 87437 Kempten (DE)
(72) Erfinder: Klein, Max, D-87471 Durach (DE)
(74) Vertreter: Pfister, Helmut, Dipl.-Ing.

(56) Entgegenhaltungen:
- EP-A- 0 274 229
- EP-A- 0 508 304
- DE-A- 3 422 150
- US-A- 5 168 978
- PATENT ABSTRACTS OF JAPAN vol. 010, no. 047 (M-456), 25.Februar 1986 & JP 60 197340 A (MATSUSHITA DENKO KK), 5.Oktober 1985,

## Beschreibung

Die Erfindung betrifft eine Vorrichtung zum Verändern der Zahl der Ströme von Gegenständen, insbesondere von Lebensmittelstapeln, die auf einer Förderbahn liegen, wobei die Förderbahn aus einem oder mehreren angetriebenen, endlosen Riemen, Schnüren oder dergleichen besteht, die über Umlenkrollen oder dergleichen umlaufen, wobei eine der Umlenkrollen oder dergleichen im wesentlichen in Achsrichtung verschiebbar ist.

Beim Herstellen von Verpackungen, insbesondere von Lebensmitteln, werden die Lebensmittel z.B. zuerst durch eine Schneidmaschine in einzelne Scheiben geschnitten und aus den Scheiben werden einzelne Stapel gebildet. Die Stapel müssen gewogen werden. Stapel mit falschem Gewicht müssen aussortiert werden. Anschließend werden die Stapel einer Verpackungsmaschine zugeführt. Die Leistungsfähigkeit der Schneidmaschine ist oft wesentlich größer als die Leistungsfähigkeit der Verpackungsmaschine, so daß aus dem Strom von Gegenständen, der von der Schneidmaschine kommt, eine größere Zahl von Strömen geformt werden muß, die den Verpackungsmaschinen zugeleitet werden.

Bei anderen Anwendungsfällen geht es darum, aus einer größeren Zahl von Strömen von Gegenständen eine kleinere Zahl oder einen einzelnen Strom zu fertigen.

Die Veränderung der Zahl der Ströme kann beispielsweise durch Weichen oder ähnliche Mittel erfolgen, die auf Tabletts oder dergleichen einwirken, auf denen die Lebensmittel liegen. Bei der seitlichen Verschiebung, die zur Veränderung der Zahl der Ströme notwendig erscheint, ergeben sich seitliche Kräfte, die auf die Lebensmittelstapel einwirken. Liegen die Lebensmittelstapel, Lebensmittelstücke oder dergleichen, direkt auf einem Förderband, auf Schnüren oder dergleichen auf, besteht die Gefahr, daß die seitlichen Bewegungen zu rasch erfolgen, so daß die Lebensmittelstapel nicht sicher mitgenommen werden.

Handelt es sich um eine geschindelte Anordnung, wird die Anordnung gestört und das äußeren Aussehen beeinträchtigt. Dabei spielt auch eine Rolle, daß Fett bzw. Feuchtigkeit die Reibung zwischen Unterlage und Lebensmittel vermindern. Da aber eine sichere Mitnahme erfolgen muß, müssen die seitlichen Bewegungen relativ langsam ausgeführt werden, wodurch wiederum die Leistungsfähigkeit der Vorrichtung reduziert wird.

Es ist Aufgabe der Erfindung, eine Anordnung zu treffen, die bei großem Durchsatz eine sichere seitliche Verschiebung der einzelnen Gegenstände der Ströme möglich macht.

Zur Lösung dieser Aufgabe wird vorgeschlagen, daß mehr als eine Umlenkrolle in Achsrichtung verschiebbar ist.

Bisher ist es üblich, auf das Förderband, das beispielsweise aus einzelnen parallel geführten Schnüren bestehen kann, an einem Ende die Lebensmittelstapel oder dergleichen aufzulegen. Vor oder während des Transportes auf dem Förderband wird dann die Umlenkrolle am ablaufenden Ende um einen bestimmten Betrag seitlich verschoben. Der Verschiebungsweg muß dabei so groß sein, daß am Ende des Verschiebungsweges mindestens zwei Ströme erreicht werden, so daß die Vorrichtungen, die die Weiterförderung übernehmen, jeweils nebeneinander angeordnet werden können.

Wenn nun, wie die Erfindung vorschlägt, nicht nur die eine Umlenkrolle, beispielsweise die am ablaufenden Ende seitlich verschoben wird, sondern wenn beide Umlenkrollen eine seitliche Verschiebung erfahren, läßt sich erreichen, daß wesentlich geringere Kräfte zwischem dem Förderband und den Gegenständen übertragen werden müssen, da für die Verschiebung die ganze Zeitspanne genützt werden kann, während der der Gegenstand auf dem Förderband liegt. Umgekehrt können bei gleicher Beschleunigung größere Verschiebungen erhalten werden.

Die Erfindung gibt ferner die Möglichkeit, das Ende der Förderbahn auf das das Fördergut aufgegeben wird, jeweils so zu verschieben, daß optimale Voraussetzungen für die Bewegung des jeweils aufgegebenen Fördergutes erhalten werden. Wenn beispielsweise der Gegenstand durch die Vorrichtung nach links abgelenkt werden soll, kann das Aufgabeende der Förderbahn, kurz vor dem Auflaufen des Gegenstandes, in eine nach rechts verschobene Stellung gebracht werden. Nach der Aufgabe des Gegenstandes wird die Umlenkrolle beispielsweise in eine Mittellage zurückgefahren, so daß diese Umlenkrolle für die Aufgabe des nächsten Gegenstandes eine günstige Stellung einnimmt. Bei dieser Rückbewegung erfolgt aber eine Verschiebung des zuerst aufgegebenen Gegenstandes nach links, also in die gewünschte Richtung. Die Verweilzeiten der Gegenstände auf der Förderbahn können dadurch optimal für die gewünschte seitliche Verschiebung ausgenützt werden.

Für die Verschiebungsvorrichtung jeder der Umlenkrollen ist insbesondere eine Steuerung vorgesehen. Dabei wird vorgeschlagen, daß eine gemeinsame Steuerung auf beide Umlenkrollen oder dergleichen einwirkt. Mit einer solchen Anordnung wird es möglich, die Verschiebungsbewegung der Gegenstände exakt zu steuern. Dabei können beispielsweise gleichförmige seitliche Beschleunigungen angestrebt werden und auf diese Weise sehr harmonische Bewegungen erhalten werden, die sicherstellen, daß keine störende Verschiebung der Gegenstände gegenüber dem Förderband auftritt.

Ein weiterer Vorteil besteht darin, daß im Aufgabe- oder Abgabebereich zwischen dem Förderband der erfindungsgemäßen Vorrichtung einerseits und den vorhergehenden oder nachfolgenden Fördereinrichtungen andererseits keine oder nur eine sehr geringe Richtungsänderung auftritt, was ebenfalls dazu beiträgt, daß die gewünschte seitliche Versetzung eines Stapels oder dergleichen exakt erreicht wird.

Es ist klar, daß es für die gewünschten seitlichen Verschiebungen der Gegenstände auf der Förderbahn notwendig ist, die Förderbahn ausreichend lang zu gestalten, um die seitlichen Beschleunigungen in Grenzen zu halten. Dies ergibt die Notwendigkeit, die Schnüre oder dergleichen zwischen den Umlenkrollen zu unterstützen. Erfolgt die Unterstützung durch Unterstützungsbleche ergeben sich zusätzliche Reibungen. Auch besteht die Gefahr, daß die Schnüre oder dergleichen nicht gleichförmig seitlich bewegt werden.

In weiterer Ausführung wird daher vorgeschlagen, daß die Förderbahn zwischen den Umlenkrollen Unterstützungsmittel, insbesondere Tragrollen aufweist und die Unterstützungsmittel parallel zu den Umlenkrollenachsen verschiebbar sind. Der Verschiebungsantrieb der Unterstützungsmittel ist dabei vorzugsweise von der Verschiebung der Umlenkrollen abhängig.

Bei einer anderen Ausgestaltung der Erfindung ist vorgesehen, daß mehrere Förderbahnen hintereinander angeordnet sind und die Umlenkrollen der Förderbahnen jeweils in Achsrichtung verschiebbar sind. Eine solche Anordnung bringt den Vorteil einer sehr hohen Leistung, da hierbei nicht nur die Umlenkrollen am vorderen und rückwärtigen Ende der Vorrichtung verschiebbar sind, sondern die Förderbahn insgesamt gleichzeitig verschiedene Wege für die geförderten Gegenstände bewirken kann.

Ein Merkmal der Erfindung, der ebenfalls zur Förderung der Leistungsfähigkeit der erfindungsgemäßen Vorrichtung dient, besteht darin, daß der Verschiebungsantrieb der Umlenkrollen Gegengewichte zum Massenausgleich in gegenläufiger Richtung antreibt. Dadurch lassen sich die Beschleunigungen bei der Verschiebung erhöhen, ohne daß die Laufruhe oder Standfestigkeit der Vorrichtung beeinträchtigt wird. Die hohen Beschleunigungen sind insbesondere dann anwendbar, wenn der Bereich der jeweiligen Umlenkrolle von zu transportierenden Gegenständen frei ist und es darum geht, die Umlenkrolle in die jeweils gewünschte Aufnahme- oder Abgabeposition zu bringen.

Weitere fakultative Merkmale ergeben sich aus den Unteransprüchen.

Dokument EP-A-0 274 229 offenbart eine Vorrichtung nach dem Oberbegriff des Anspruchs 1.

In der Zeichnung sind zwei Ausführungsbeispiele der Erfindung schematisch dargestellt. Es zeigen:
- Fig. 1: eine Draufsicht auf eine erfindungsgemäße Vorrichtung und
- Fig. 2: ein Draufsicht auf ein abgewandeltes Ausführungsbeispiel der Erfindung.

An einem Gestell 1 ist an den Enden je ein Schlitten 2 bzw. 3 angeordnet, wobei die Schlitten jeweils auf Führungen 4 bzw. 5 beweglich sind. Der Antrieb der Schlitten erfolgt durch die programmierbaren Servomotoren 6 und 7. Die Schlitten tragen im wesentlichen je zwei angetriebene Wellen 8 und 9 bzw. 10 und 11. Die Wellen 8 und 10 sind als Umlenkrollen ausgebildet für eine Förderbahn 12, die sich zwischen den Wellen 8 und 10 erstreckt. Eine oder auch beide Wellen sind angetrieben, so daß auf der Förderbahn 12 eine Förderung von aufgelegten Gegenständen in Richtung des Pfeiles 13 erfolgt.

Zwischen den Wellen 8 und 9 erstreckt sich ein weiteres, aus einzelnen Schnüren bestehendes Förderband 14. Ein gleichartiges Förderband 15 erstreckt sich zwischen den Wellen 10 und 11. Die Umlenkrollen 8 und 10 besitzen Rillen für die Schnüre der Förderbahn 12.

Sowohl die Welle 8 und damit die Umlenkrollen bzw. Umlenkrillen für das ablaufende Ende des Förderbandes 12 als auch die Welle 10 mit den Umlenkrollen oder Umlenkrillen für das vordere Ende des Förderbandes 12 sind durch die Servo-Motore 6 und 7 jeweils in Richtung der Doppelpfeile 16 und 17 verschiebbar.

Wird ein Gegenstand bzw. ein Lebensmittelstapel beispielsweise aus geschnittenen Wurstscheiben über das Förderband 15 auf das Förderband 12 aufgegeben, können sich je nach der gewünschten Bewegung die beiden Schlitten 2 und 3 mit den Wellen 8, 9 bzw. 10, 11 in Richtung der Pfeile 16 und 17 bewegen und zwar beispielsweise in gleicher Richtung, aber auch gegenläufig. Bei der Übergabe der Gegenstände auf den Anfang der Förderbahn 12 bzw. auf das Förderband 15 kann dabei der Schlitten 3 stillstehen, so daß bei der Übergabe keine Störungen auftreten. Der Schlitten 2 kann dagegen bereits in Achsrichtung der Wellen 8, 9 verschoben sein. Während nun das Fördergut auf der Förderbahn 12 transportiert wird, bewegen sich beide Schlitten 2, 3 in die gewünschte Lage mit dem Ziel einer möglichst schonenden seitlichen Verschiebung der auf dem Förderband transportierten Güter.

Insbesondere ist es möglich, den Schlitten 3 mit den zugehörigen Einrichtungen schon in die geeignete Aufnahmeposition für den nachfolgenden Stapel oder dergleichen zu bringen, wenn der Stapel sich noch auf der Förderbahn 12 befindet.

Die erfindungsgemäße Vorrichtung ist nicht nur dazu geeignet, aus einem Strom von Gütern eine größere Zahl von Güterströmen zu erzeugen. Sie kann auch umgekehrt dazu verwendet werden, eine größere Zahl von Strömen von Gütern auf eine kleinere Anzahl zu reduzieren, also die einzelnen Güterströme zusammenzuführen.

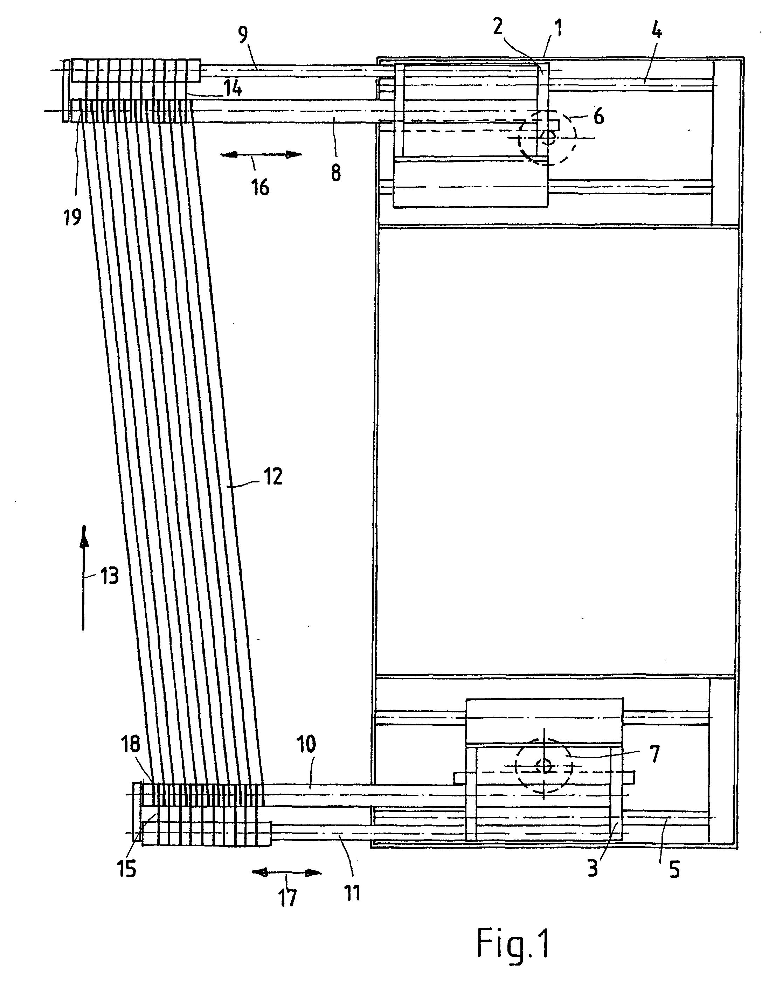

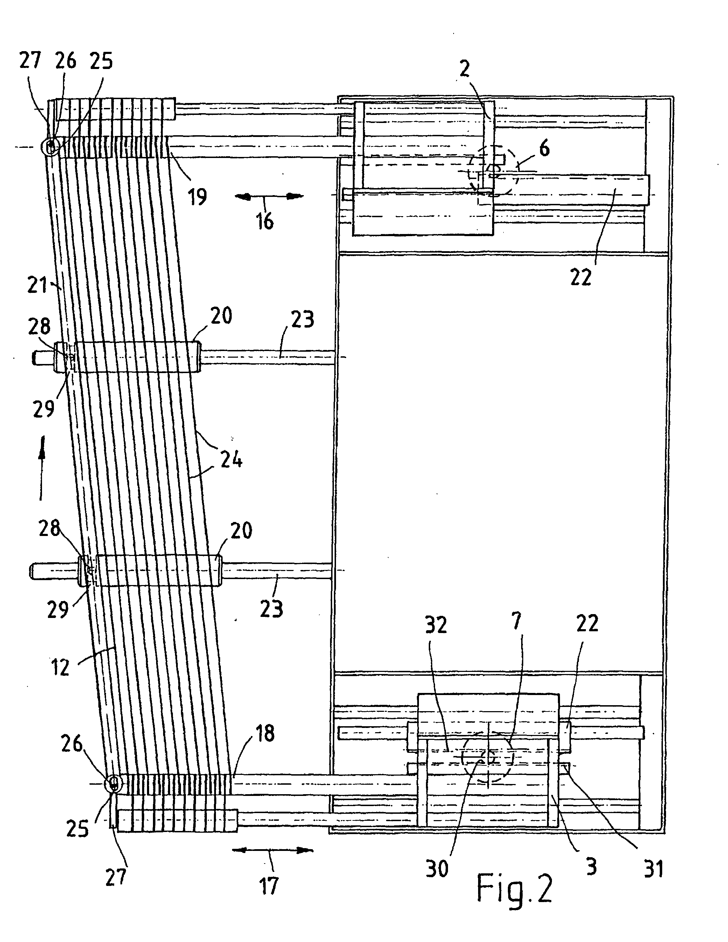

Das Ausführungsbeispiel der Erfindung gemäß Fig. 2 unterscheidet sich von denjenigen gemäß Fig. 1 im wesentlichen dadurch, daß zwischen den Umlenkrollen 18 und 19 zusätzliche Unterstützungsmittel 20 in Form von Tragrollen vorgesehen sind. Diese Tragrollen 20 können zylinderische Körper sein, die auf den Achsen 23 frei drehbar sind. Es ist aber auch möglich, am Umfang der Tragrollen 20 nutenartige Vertiefungen für die Schnüre 24 der Förderbahn 12 vorzusehen, so daß die Tragrollen 20 die Schnüre nicht nur unterstützen, sondern auch seitlich führen.

Zwischen den Umlenkrollen 18 und 19 erstreckt sich ein Gestänge 21, das an seinen Enden jeweils eine Langlochanordnung 25 aufweist. In dieses Langloch greift jeweils ein Stift 26 ein, der von einer nichtdrehbaren Endplatte 27 auf den Umlenkrollenachsen getragen ist. Bei der Verschiebungsbewegung in Richtung der Pfeile 17 oder 16 werden die Enden des Gestänges 21 sinngemäß mitgenommen, so daß dieses Gestänge 21 jeweils parallel zu der Förderbahn bzw. den Schnüren 24 verläuft.

Das Gestänge 12 besitzt ferner Stifte 28, die in Ringnuten 29 der Tragrollen 20 eingreifen. Die Stifte 28 nehmen dadurch die Tragrollen 20 jeweils mit, was den Vorteil hat, daß ein besonderer Verschiebungsantrieb für diese Tragrollen 20 entbehrlich ist.

Beim Ausführungsbeispiel der Fig. 2 treiben die Servomotoren 6,7 nicht lediglich die Schlitten 2 und 3 an. Die Ritzel 30 für diesen Antrieb, der jeweils mit einer Zahnstange 31 an den Schlitten 2 bzw. 3 zusammenwirkt, wirkt auch mit einer Verzahnung 32 zusammen, die Teil eines Gegengewichtes 20 ist. Das Gegengewicht 20 bewegt sich somit gegensinnig zu den Schlitten 2 bzw. 3.

## Patentansprüche

1. Vorrichtung zum Verändern der Zahl der Ströme von Gegenständen, insbesondere von Lebensmittelstapeln, mit einer Förderbahn (12), wobei die Gegenstände auf der Förderbahn liegen, und die Förderbahn aus einem oder mehreren angetriebenen, endlosen Riemen, Schnüren oder dergleichen besteht, die über in Förderrichtung nacheinander angeordnete Umlenkrollen oder dergleichen umlaufen, wobei mehr als eine der Umlenkrollen oder dergleichen im wesentlichen in Achsrichtung verschiebbar sind, wobei für jede Umlenkrolle (18,19) oder dergleichen ein Schlitten (3,2) vorgesehen ist, der mittels eines Verschiebeantriebes (6,7) verschiebbar ist, **dadurch gekennzeichnet, daß** der Verschiebungsantrieb (6,7) für die Umlenkrollen (18,19) oder dergleichen ein Gegengewicht (22) zum Massenausgleich in gegenläufiger Richtung antreibt.

2. Vorrichtung nach Anspruch 1, **dadurch gekennzeichnet, daß** die Verschiebungswege jeder der beiden Umlenkrollen (18,19) oder dergleichen je von einer Steuerung bestimmt sind.

3. Vorrichtung nach einer oder beiden der vorhergehenden Ansprüche, **dadurch gekennzeichnet, daß** eine gemeinsame Steuerung für die Verschiebung der Umlenkrollen oder dergleichen vorgesehen ist.

4. Vorrichtung nach einem oder mehreren der vorhergehenden Ansprüche, **dadurch gekennzeichnet, daß** für den Verschiebungsantrieb der beiden Umlenkrollen oder dergleichen je ein Servo-Motor (6,7) vorgesehen ist.

5. Vorrichtung nach einem oder mehreren der vorhergehenden Ansprüche, **dadurch gekennzeichnet, daß** die Förderbahn (12) zwischen den Umlenkrollen (18,19) Unterstützungsmittel, insbesondere Tragrollen (20) aufweist und die Unterstützungsmittel parallel zu den Umlenkrollenachsen verschiebbar sind.

6. Vorrichtung nach einem oder mehreren der vorhergehenden Ansprüche, **dadurch gekennzeichnet, daß** mehrere Förderbahnen hintereinander angeordnet sind und die Umlenkrollen der Förderbahnen jeweils in Achsrichtung verschiebbar sind.

7. Vorrichtung nach einem oder mehreren der vorhergehenden Ansprüche, **dadurch gekennzeichnet, daß** ein Gestänge (21) vorgesehen ist, das sich zwischen zwei Umlenkrollen (18, 19) erstreckt und bei der Schiebebewegung der Umlenkrollen mit diesen bewegbar ist und daß das Gestänge (21) weitere Umlenkrollen oder Unterstützungsmittel (20) verschiebt.

8. Vorrichtung nach einem oder mehreren der vorhergehenden Ansprüche, **dadurch gekennzeichnet, daß** eine Umlenkrolle (18,19,10,8) oder dergleichen Teil einer weiteren Fördereinrichtung (14,15) ist, wobei diese weitere Fördereinrichtung der Zu- oder Abförderung der Gegenstände dient.

## Claims

1. Device for altering the number of flows of objects, in particular of food stacks, with a conveying line (12), the objects lying on the conveying line, and the conveying line comprising one or more driven, endless belts, strings or the like, which revolve across deflection sheaves or the like arranged one after the other in conveying direction, more than one of the deflection sheaves or the like being essentially movable in the direction of the axis, and a slide (3, 2) being provided for each of the deflection sheaves (18, 19) or the like which can be shifted via a shifting drive (6, 7), **characterised in that** the shifting drive (6, 7) for the deflection sheaves (18, 19) or the like drives a balance weight (22) for mass balancing in the opposite direction.

2. Device according to claim 1, **characterised in that** the shifting ways of each of the two deflection sheaves (18, 19) or the like are defined by a control each.

3. Device according to one or both of the preceding claims, **characterised in that** a joint control is provided for shifting the deflection sheaves or the like.

4. Device according to one or more of the preceding claims, **characterised in that** one servo motor (6,7) each is provided for the shifting drive of the two deflection sheaves or the like.

5. Device according to one or more of the preceding claims, **characterised in that** the conveying line (12) has supporting means between the deflection sheaves (18, 19), in particular carrying rollers (20), and the supporting means can move parallel to the axis of the deflection sheaves.

6. Device according to one or more of the preceding claims, **characterised in that** several conveying lines are arranged one behind the other and the deflection sheaves of the conveying lines can each move in the direction of the axis.

7. Device according to one or more of the preceding claims, **characterised in that** a rod assembly (21) is provided which extends between the two deflection sheaves (18, 19) and can move during the movement of the deflection sheaves together with the deflection sheaves and that the rod assembly (21) shifts other deflection sheaves or supporting means (20).

8. Device according to one or more of the preceding claims, **characterised in that** a deflection sheave (18, 19, 10, 8) or the like is part of another conveying device (14, 15), this further conveying device serving for feeding or carrying on the objects.

## Revendications

1. Dispositif de modification du nombre de flux d'objets, en particulier d'empilements de denrées, à l'aide d'un transporteur à bande (12) sur lequel ces objets sont posés, consistant en une ou plusieurs courroies infinies et commandées, en des lanières ou en des moyens de transport similaires, qui passent sur des poulies ou des dispositifs similaires à la suite les uns des autres dans le sens du transport et dont au moins une poulie peut être déplacée le long de son axe de rotation, **caractérisé en ce qu'**il existe un coulisseau (3, 2) pour chaque poulie (18, 19) ou pour chaque dispositif similaire, qui peut être décalé à l'aide d'une commande de déplacement (6, 7) ou par un autre moyen similaire et **en ce que** la commande de déplacement (6, 7) ou le moyen similaire commande une contre-masse (22) en direction opposée afin d'équilibrer les masses.

2. Dispositif selon la revendication 1, **caractérisé en ce que** les déplacements de chacune des deux poulies (18, 19) ou des dispositifs similaires sont contrôlés par. une commande pour chaque poulie.

3. Dispositif selon l'une ou les deux revendications précédentes, **caractérisé en ce qu'**une commande commune est prévue pour le déplacement des poulies ou des dispositifs similaires.

4. Dispositif selon l'une ou plusieurs des revendications précédentes, **caractérisé en ce que** chacune des poulies est commandée individuellement par un servomoteur (6, 7).

5. Dispositif selon l'une ou plusieurs des revendications précédentes, **caractérisé en ce que** le transporteur à bande (12) possède des moyens de support et plus précisément des rouleaux de support (20), situés entre les poulies (18, 19) et pouvant être déplacés parallèlement aux axes de rotation des poulies.

6. Dispositif selon l'une ou plusieurs des revendications précédentes, **caractérisé en ce que** plusieurs transporteurs à bande se suivent dont les poulies de chaque transporteur à bande peuvent être déplacées le long de leurs axes de rotation.

7. Dispositif selon l'une ou plusieurs des revendications précédentes, **caractérisé en ce qu'**un ensemble de tiges (21) situé entre deux poulies (18, 19) se déplace conjointement aux poulies et **en ce que** l'ensemble de tiges (21) déplace d'autres poulies ou moyens de support (20).

8. Dispositif selon l'une ou plusieurs des revendications précédentes, **caractérisé en ce qu'**une poulie (18, 19, 10, 8) ou un dispositif similaire fait partie d'un autre transporteur à bande (14, 15) servant soit à apporter les objets, soit à les évacuer.
